# EUROPEAN PATENT SPECIFICATION

(11) **EP 3 609 955 B1**
(45) Date of publication and mention of the grant of the patent: **26.01.2022**
(21) Application number: 18717892.6
(22) Date of filing: 09.04.2018
(51) Int. Cl.: C08K 7/14

(54) **ALIPHATIC POLYAMIDE COMPOSITIONS AND CORRESPONDING MOBILE ELECTRONIC DEVICE COMPONENTS**
ZUSAMMENSETZUNGEN AUS ALIPHATISCHEN POLYAMIDEN UND ZUGEHÖRIGE MOBILE ELEKTRONISCHE VORRICHTUNGSKOMPONENTEN
COMPOSITIONS DE POLYAMIDE ALIPHATIQUE ET COMPOSANTS D'UN DISPOSITIF ÉLECTRONIQUE MOBILE CORRESPONDANT

(30) Priority: 10.04.2017 US 201762483733 P; 13.06.2017 EP 17175633
(43) Date of publication of application: 19.02.2020
(73) Proprietor: Solvay Specialty Polymers USA, LLC, Alpharetta, Georgia 30005-3914 (US)
(72) Inventor: DAVIS, Raleigh L., Alpharetta, Georgia 30005 (US); GAUTAM, Keshav S., Duluth, Georgia 30097 (US); PHILLIPS, Karen, Cumming, Georgia 30040 (US)
(74) Representative: Benvenuti, Federica
(86) International application number: PCT/EP2018/059034
(87) International publication number: WO 2018/189114

(56) References cited:
- US-A1- 2015 210 835
- US-A1- 2016 122 510
- Frederick T Wallenberger ET AL: "Glass Fibers", ASM Handbook, Vol. 21: Composites (#06781G), 2001, pages 27-34, XP055425263, DOI: 10.1557/PROC-702-U5.3.1 Retrieved from the Internet: URL:http://citenpl.internal.epo.org/wf/sto rage/15FBF917E080001E8DF/originalPdf [retrieved on 2017-11-15]

## Description

### FIELD OF THE INVENTION

The invention relates to aliphatic polyamide compositions that provide high dielectric performance and high mechanical performance. The invention further relates to mobile electronic device components incorporating the aliphatic polyamide compositions.

### BACKGROUND OF THE INVENTION

Due to their reduced weight and high mechanical performance, polymer compositions are widely used in mobile electronic device components. In particular, aliphatic polyamide polymer compositions including glass fibers are especially suitable for mobile electronic device applications. Because such composition can have appropriate mechanical strength, reduced weight and greater design options, they are attractive as a metal replacement in mobile electronic device components.

### DETAILED DESCRIPTION OF THE INVENTION

Described herein are aliphatic polyamide compositions including an aliphatic polyamide, glass fiber and, optionally, one or more additives. It was surprisingly found that aliphatic polyamide compositions containing specifically selected glass fibers had similar dielectric performance, and significantly improved mechanical performance, relative to corresponding aliphatic polyamide compositions containing low dielectric glass fiber. At least partially due to the high dielectric performance (low dielectric constant) and significantly improved mechanical performance, the aliphatic polyamide compositions can be advantageously incorporated into mobile electronic device components. The unique mechanical and dielectric properties, the aliphatic polyamide compositions described herein can be advantageously incorporated into mobile electronic device components.

The dielectric constant of a polymer composition is significant in determining the suitability for the material in application settings where radio communication is present. For example, in mobile electronic devices, the dielectric constant of the material forming the various components and housing can significantly degrade wireless radio signals (*e.g*. 1MHz, 2.4 GHz and 5.0 GHz frequencies) transmitted and received by the mobile electronic device through one or more antennas. The dielectric constant of a material represents, in part, ability of the material to interact with the electromagnetic radiation and, correspondingly, disrupt electromagnetic signals (e.g. radio signals) travelling through the material. Accordingly, the lower the dielectric constant of a material at a given frequency, the less the material disrupts the electromagnetic signal at that frequency.

Traditionally, aliphatic polyamide compositions in application settings where low wireless signal loss is desired incorporate low dielectric glass fibers. Generally, standard glass fiber is incorporated into aliphatic polyamide compositions to increase the mechanical performance of the aliphatic polyamide composition, which would otherwise be unsuitable for application settings, including but not limited to, mobile electronic devices. However, while standard modulus glass fibers have a relatively high tensile modulus (E is from70 GPa to 80 GPa), and thus impart excellent mechanical properties to the aliphatic polyamide composition, the dielectric constant is also relatively high (ε(1MHz) is from 6.0 to 7.0), thus imparting a relatively high dielectric constant to the polyamide composition. As used herein, E is the tensile modulus and ε(ω) is the dielectric constant at frequency ω. Accordingly, the resulting polyamide composition absorbs a significant amount of energy from wireless radio signals. Traditional methods to solve the problem of poor dielectric performance in glass filled polyamide compositions include incorporating low dielectric constant glass fiber (ε(1MHz) is from 4.5 to 5.0) into the composition. However, while such solutions improve dielectric performance, the mechanical performance of the polymer composition is significantly compromised, at least in part due to the fact that low dielectric glass fibers have a relative low tensile modulus (E is from 60 GPa to 65 GPa).

Applicant surprisingly discovered that aliphatic polyamide compositions, including a glass fiber having a dielectric constant from 5.2 to 5.4 at 1MHz and a tensile modulus of from 75 GPa to 100 GPa ("selected glass fiber"), had a dielectric performance substantially similar to that of corresponding aliphatic polyamide compositions including low dielectric glass fiber and, simultaneously, a mechanical performance greater than corresponding aliphatic polyamide compositions including a low dielectric glass fiber or standard modulus glass fiber. For clarity, the difference between an aliphatic polyamide composition, including the selected glass fiber, and a corresponding aliphatic polyamide composition including low dielectric glass fiber is that the corresponding aliphatic polyamide composition includes low dielectric glass fiber in place of the selected glass fiber. Similarly the difference between an aliphatic polyamide composition, including the selected glass fiber, and a corresponding aliphatic polyamide composition including a standard modulus glass fiber, is that the corresponding aliphatic polyamide composition includes standard modulus glass fiber in place of the selected glass fiber. Still further, an aliphatic polyamide composition, including the selected glass fiber, has substantially similar dielectric performance to that of a corresponding aliphatic polyamide composition when the difference in ε(1MHz) of the aliphatic polyamide composition and the corresponding aliphatic composition, relative to the corresponding aliphatic composition, is no more than 4%, no more than 3.5%, no more than 3%, no more than or less than 1%.

Additionally, because the aliphatic polyamide compositions, including the selected glass fiber, have significantly improved mechanical properties relative to corresponding aliphatic polyamide compositions having low dielectric glass fiber, the aliphatic polyamide composition can include less of the selected glass fiber, and still possess significantly improved mechanical properties and improved dielectric performance (lower ε(1MHz)) relative to corresponding aliphatic polyamide compositions including higher concentrations of low dielectric glass fiber. Moreover, the reduced amount of the selected glass fiber can provide a significant cost savings, especially when the aliphatic polyamide compositions are produced on a commercial or industrial scale.

### The Aliphatic Polyamide

The aliphatic polyamide composition includes an aliphatic polyamide polymer. As used herein, an aliphatic polyamide polymer has at least 50 mol% of a recurring unit (R_{PA}), relative to the total number of moles of recurring units in the aliphatic polyamide. In some embodiments, the aliphatic polyamide has at least 60 mol%, at least 70 mol%, at least 80 mol%, at least 90 mol%, at least 95 mol%, at least 99 mol% or at least 99.9 mol% of recurring unit (R_{PA}). Recurring unit (R_{PA}) is represented by the following formula -[-Ma-Mb-]- : 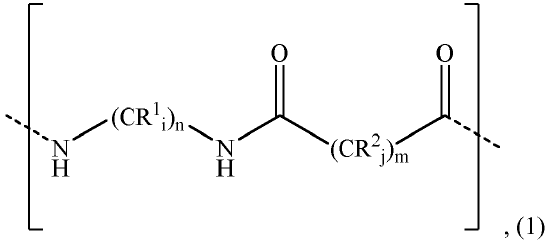 where R¹ and R², at each instance, are independently selected from the group consisting of an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; i and j, at each instance, are independently selected integers from 0 to 2; n is an integer from 4 to 12, from 4 to 10 or from 6 to 10; and m is an integer from 6 to 18, or from 6 to 14 or from 6 to 12. For clarity, in Formula (1), the carbon atom in each -(CR¹ᵢ)- and each -(CR²ⱼ)- has, respectively, 2 - i and 2 - j hydrogen atoms bonded to it. For example, if i = 1 for one of the n units -(CR¹ᵢ)-, in one embodiment, -(CR¹ᵢ)ₙ is represented by -(CHR¹)-(CR¹ᵢ)ₙ₋₁-. Analogous notation is used with other chemical structures herein. Additionally, as used herein, a dashed bond (----) indicates a bond to the atom of another recurring unit, the same or different than recurring unit (R_{PA}). In some embodiments, each i is zero, each j is zero, or each i and each j is zero. Additionally or alternatively, n can be 6 and m can be 10 or n can be 10 and m can be 10. In some embodiments, the aliphatic polyamide is a polyamide 6,10 ("PA6,10") or a polyamide 10,10 ("PA10,10").

The aliphatic polyamide polymer can have an inherent viscosity of from 0.7 deciliters per gram ("dL/g") to 1.4 dL/g.

### The Polyamide Composition

The aliphatic polyamide composition includes the aliphatic polyamide polymer, glass fiber and, optionally, one or more additives. It was surprisingly found - polyamide compositions including the selected glass fibers had substantially similar dielectric performance, and simultaneously improved mechanical properties, relative to corresponding aliphatic polymer compositions including low dielectric constant glass fibers.

In some embodiments, the aliphatic polyamide composition includes a plurality of distinct aliphatic polyamide polymers, where each aliphatic polyamide polymer has properties as described above. In some embodiments, each polymer in the aliphatic polyamide composition is an aliphatic polyamide polymer. Regardless of whether the aliphatic polyamide composition includes one or a plurality of aliphatic polyamides, in some embodiments, the total concentration of aliphatic polyamide polymers in the aliphatic polyamide composition is from 40 wt.% to 70 wt.%, 50 wt.% to 60 wt.%, or 55 wt.% to 65 wt.%, relative to the total weight of the aliphatic polyamide composition.

In some embodiments, the aliphatic polyamide composition is free of aromatic polymers and cycloaliphatic polymers. As used herein, an aromatic polymer contains at least 5 mol%, at least 10 mol%, at least 15 mol% or at least 20 mol% of a recurring unit having an aromatic moiety, relative to the total number of recurring units in the polymer. Similarly, as used herein, a cycloaliphatic polymer contains at least 10 mol%, at least 15 mol% or at least 20 mol% recurring units having a cycloaliphatic moiety, relative to the total number of recurring units in the polymer. In general, due to the conjugated electronic structure in the recurring units aromatic polymers, the polymers have reduced dielectric performance (higher dielectric constant), relative to aliphatic polyamide polymers. With respect to cycloaliphatic polyamides, generally such materials are amorphous, and correspondingly result in lower mechanical performance, relative to the aliphatic polyamides represented by Formula 1. An aliphatic polyamide composition free of aromatic and cycloaliphatic polymers refers to an aliphatic polyamide composition containing a total concentration of aromatic polymers and cycloaliphatic polymers that is less than 15 wt.%, less than 10 wt.%, less than 5 wt.%, less than 2 wt.%, less than 1 wt.% or less than 0.5wt%, relative to the total weight of the aliphatic polyamide composition.

The aliphatic polyamide composition contains glass fibers having a tensile modulus of at at least 75 GPa, at least 80 GPa or at least 85 GPa. Additionally, the glass fibers have a tensile modulus of no more than 100 GPa or no more than 95 GPa. Additionally, the aliphatic polyamide composition contains glass fibers having a dielectric constant of 5.1 to 5.5, or from 5.2 to 5.4, at frequencies from 1 MHz to 10 GHz, or at a frequency of 1 MHz, 2.4 MHz or 5 GHz. The tensile modulus of the glass fibers can be measured according to ASTM D2343. The dielectric constant of the glass fibers can be measured according to ASTM D150 (1.0 MHz) and ASTM D2520 (2.4 GHz).

The concentration of the glass fibers in the aliphatic polymer composition is at least 30 wt.%, at least 35 wt% or at least 40 wt.%, relative to the total weight of the aliphatic polymer composition. Additionally, the concentration of the glass fibers in the aliphatic polymer composition is no more than 60 wt.%, no more than 55 wt.%, no more than 50 wt.% or no more than 45 wt.%, relative to the total weight of the aliphatic polymer composition. In some embodiments, the glass fiber is a round glass fiber. The round glass fiber has a circular crosssection. In general, the average diameter of the glass fibers is from 3 micrometers ("µm") to 30 µm or from 5 µm to 12 µm.

The aliphatic polyamide composition optionally includes one or more additives. The one or more additives include UV absorbers; mineral fillers including, but not limited to, talc, mica wollastonite and kaolin; light and heat stabilizers; antioxidants; lubricants; processing aids; plasticizers; flow modifiers; flame retardants; pigments, dyes and colorants, including, but not limited to, TiO₂, carbon black, zinc sulfide, barium sulfate, zinc oxide and ferric oxide; antistatic agents; extenders; and metal deactivators. When present in the aliphatic polymer composition, the total concentration of the one or more additives is less than 10 wt.%, less than 5 wt.% or less than 2 wt.%, relative to the total weight of the aliphatic polyamide composition. In some embodiments, the total concentration of pigments, dyes or colorants is from 0.5 wt.% or from 1 wt.% to 5 wt.%.

The aliphatic polyamide compositions can have a dielectric constant at 1 MHz of less than 4.0, less than 3.9, less than 3.8, less than 3.75, less than 3.7, or less than 3.6. Additionally or alternatively, the aliphatic polyamide composition can have a dielectric constant at 2.4 GHz of less than 3.8, less than 3.75, less than 3.7, less than 3.65, less than 3.6, less than 3.55, less than 3.5, or less than 3.45. Additionally or alternatively, the aliphatic polyamide composition can have a tensile modulus of at least 10 GPa, at least 11 GPa, at least 12 GPa at least 13 GPa, at least 14 GPa, at least 15 GPa, at least 16 GPa, at least 17 GPa, at least 18 GPa, at least 19 GPa or at least 20 GPa. The dielectric constant and tensile modulus of the aliphatic polyamide compositions can be measured as described in the Examples.

### Mobile Electronic Device Components

The aliphatic polyamide compositions described herein can be advantageously incorporated into mobile electronic device components. As used herein, a "mobile electronic device" refers to an electronic device that is intended to be conveniently transported and used in various locations. A mobile electronic device can include, but is not limited to, a mobile phone, a personal digital assistant ("PDA"), a laptop computer, a tablet computer, a wearable computing device *(e.g.,* a smart watch, smart glasses and the like), a camera, a portable audio player, a portable radio, global position system receivers, and portable game consoles.

The mobile electronic devices of interest herein contain at least one radio antenna, configured to send or receive radio signals. To transmit radio signals, the mobile electronic device converts data into a radio signal and transmits the radio signal through the antenna. To receive radio signals, the mobile electronic receives a radio signal through the antenna and decodes the radio signal into data. In one embodiment, the radio antenna can be a WiFi antenna. In some embodiments, the WiFi antenna transmits or receives radio signals having a 2.4 GHz or 5.0 GHz frequency. In other embodiments, the radio antenna can be a radio frequency identification ("RFID") antenna, including but not limited to, a near-field communication ("NFC") antenna. In some embodiments, the RFID antenna transmits or receives radio signals having a frequency of from 125 kHz to 134 kHz, 13.56 MHz or from 856 MHz to 960 MHz.

In some embodiments, at least a portion of the mobile electronic device can be exposed to the external environment of the mobile electronic device *(e.g.,* at least a portion of the component is in contact with the environment external to the mobile electronic device). For example, at least a portion of the device component can form at least a portion of the external housing of the mobile electronic device. In some such embodiments, the device component can be a full or partial "frame" around the periphery of the mobile electronic device, a beam in the form of a lattice work, or a combination thereof. As another example, at least a portion of the device component can form at least a portion of an input device. In some such embodiments, a button of the electronic device can include the device component. In some embodiments, the device component can be fully enclosed by the electronic device *(e.g.,* the device component is not visible from an observation point external to the mobile electronic device).

In some embodiments, the mobile electronic device component is an antenna housing. In some such embodiments, at least a portion of the radio antenna is disposed on the aliphatic polyamide composition. Additionally or alternatively, at least a portion of the radio antenna can be displaced from the aliphatic polyamide composition by no more than 50 cm, no more than 30 cm, no more than 15 cm, no more than 10 cm, no more than 5 cm, no more than 1 cm, no more than 10 mm, no more than 5 mm, no more than 1 mm or no more than 0.5 mm. In some embodiments, the device component can be of a mounting component with mounting holes or other fastening device, including but not limited to, a snap fit connector between itself and another component of the mobile electronic device, including but not limited to, a circuit board, a microphone, a speaker, a display, a battery, a cover, a housing, an electrical or electronic connector, a hinge, a radio antenna, a switch, or a switchpad. In some embodiments, the mobile electronic device can be at least a portion of an input device.

The device components of the mobile electronic device can be fabricated using methods well known in the art. For example, the mobile electronic device components can be fabricated by methods including, but not limited to, injection molding, blow molding or extrusion molding. In some embodiments, the polyamide compositions can be formed into pellets (e.g., having a substantially cylindrical body between two ends) by methods known in the art including, but not limited to, injection molding. In some such embodiments, mobile electronic device components can be fabricated from the pellets.

In some embodiments, the mobile electronic device components can be coated with metal by methods well known in the art, including but not limited to, vacuum deposition (including various methods of heating the metal to be deposited), electroless plating, electroplating, chemical vapor deposition, metal sputtering, and electron beam deposition. Although the metal may adhere well to the device components without any special treatment, in some embodiments, methods well known in the art can be used to improve adhesion. Such methods include, but are not limited to, abrasion to roughen the synthetic resin surface, addition of adhesion promotion agents, chemical etching, functionalization of the surface by exposure to plasma and/or radiation (for instance laser or UV radiation) or any combination of these. Also, in some embodiments, metal coating methods can include at least one step where the mobile electronic device component is immersed in an acid bath. More than one metal or metal alloy can be plated onto the device components containing the polyamide composition. For example, one metal or alloy can be plated directly onto the synthetic resin surface because of its good adhesion, and another metal or alloy can be plated on top of the previous plating because it has a higher strength and/or stiffness. Useful coating metals and alloys include, but are not limited to, copper, nickel, iron-nickel, cobalt, cobalt-nickel, and chromium, and combinations of these in distinct layers. In some embodiments, the surface of the mobile electronic device component can be fully or partially coated with metal. In some embodiments, more than about 50% or about 100% of the surface area of the device component can be metal coated. In different areas of the device component the thickness and/or the number of metal layers, and/or the composition of the metal layers may vary. The metal may be coated in patterns to efficiently improve one or more properties in certain sections of the mobile electronic device component.

### EXAMPLES

These examples demonstrate the dielectric performance and mechanical performance of glass filled polyamide compositions.

To demonstrate dielectric and mechanical performance, 13 samples were formed. Samples 6, 11 and 13 were counter examples. To form each sample, PA6,10 was compounded with chopped round glass fiber using twin screw extrusion. Some samples also included 5 wt.% zinc sulfide as a colorant. The properties of the glass fibers used are displayed in Table 1. Glass fibers I - III are selected glass fibers, glass fiber IV is a low dielectric glass fiber and glass fiber V is a standard glass fiber. The tensile modulus of the glass fibers were measured according to ASTM D2343. The dielectric constant of the glass fibers were measured according to ASTM D150 (1.0 MHz) and ASTM D2520 (2.4 Ghz).

**TABLE 1**

| Glass Fiber ("GF") Type | ε(1 MHz) | E (GPa) |
|---|---|---|
| I | 5.3 | 86 |
| II | 5.3 | 86 |
| III | 5.3 | 87 |
| IV | 4.5 | 60 |
| V | 6.0-7.0 | 70-80 |

The dielectric performance of the samples were tested by measuring ε(1.0 MHz) or ε(2.4 GHz) according to ASTM D150 and ASTM D2520, respectively. Measurements of ε(1.0 MHz) were taken on injection molded discs having dimensions of 2 inches diameter by 1/8 inch thickness. Measurements of ε(2.4 GHz) were taken on injection molded plaques having dimensions of 2 inches by 3 inches by 1/8 inch. Mechanical properties of the samples were tested as follows. Tensile modulus, tensile strength and tensile elongation were tested according to ISO 527-2 using 1 mm/minute test speed and injection molded ISO tensile bars. Impact strength was measured using notched-Izod and Un-notched Izod impact testing respectively according to ISO 180 using injection molded ISO tensile bars.

Sample parameters for each of the samples, as well as the results of dielectric and mechanical performance testing are displayed in Tables 2 and 3, below (samples 6, 11 and 13 represent counterexamples). In Tables 2 and 3, the dissipation factor reflects the amount of energy, at the given radio frequency, that is irreversibly lost.

**TABLE 2**

| Sample | | 1 | 2 | 3 | 4 | 5 | 6 |
|---|---|---|---|---|---|---|---|
| Aliphatic Polyamide | | PA610 | PA610 | PA610 | PA610 | PA610 | PA610 |
| Glass Type | | I | III | I | II | III | IV |
| Glass Concentration (wt.%) | | 35 | 35 | 40 | 40 | 40 | 45 |
| ZnS Colorant? | | Yes | Yes | Yes | Yes | Yes | Yes |
| Tensile Modulus [Gpa] | Value | 11.3 | 12.4 | 13.1 | 13.7 | 13.8 | 12.6 |
| | St. Dev. | 0.1 | 0.138 | 0.3 | 0.3 | 0.3 | 0.3 |
| Tensile Strength [Mpa] | Value | 183 | 200 | 195 | 193 | 212 | 179 |
| | St. Dev. | 0.6 | 0.3 | 1.0 | 0.4 | 0.4 | 1.5 |
| Tensile Elongation [%] | Value | 5.2 | 5.2 | 4.9 | 4.8 | 5.0 | 3.7 |
| | St. Dev. | 0.2 | 0.12 | 0.1 | 0.2 | 0.1 | 0.1 |
| N-Izod [kJ/m^2] | Value | 17.2 | 19.8 | 18.8 | 18.1 | 20.8 | 19.3 |
| | St. Dev. | 1.1 | 0.486 | 0.8 | 0.6 | 1.3 | 1.9 |
| Un-lzod [kJ/m^2] | Value | 90 | 103 | 97 | 94 | 108 | 84 |
| | St. Dev. | 1 | 6.02 | 5 | 4 | 5 | 1 |
| Dielectric Constant (1 MHz) | Value | 3.73 | 3.65 | 3.72 | 3.81 | 3.64 | 3.70 |
| | Error | 0.04 | 0.04 | 0.04 | 0.04 | 0.04 | 0.04 |
| Dielectric Constant (2.4 GHz) | Value | - | - | 3.46 | 3.56 | 3.42 | 3.41 |
| | Error | - | - | 0.03 | 0.04 | 0.03 | 0.03 |
| Dissapation Factor (1 MHz) | Value | 0.0166 | 0.0153 | 0.0157 | 0.0143 | 0.0141 | 0.0137 |
| | Error | 0.0008 | 0.0008 | 0.0008 | 0.0007 | 0.0007 | 0.0007 |
| Dissapation Factor (2.4 GHz) | Value | - | - | 0.0112 | 0.0101 | 0.0106 | 0.0092 |
| | Error | - | - | 0.0006 | 0.0005 | 0.0005 | 0.0005 |

**TABLE 3**

| Sample | | 7 | 8 | 9 | 10 | 11 | 12 | 13 |
|---|---|---|---|---|---|---|---|---|
| Aliphatic Polyamide | | PA610 | PA610 | PA610 | PA610 | PA610 | PA610 | PA610 |
| Glass Type | | I | III | I | II | IV | III | V |
| Glass Concentration (wt.%) | | 45 | 45 | 50 | 50 | 55 | 55 | 55 |
| ZnS Colorant? | | Yes | Yes | Yes | Yes | No | No | No |
| Tensile Modulus [Gpa] | Value | 15.2 | 16.2 | 17.1 | 17.7 | 15.4 | 19.6 | 17.7 |
| | St. Dev. | 0.2 | 0.2 | 0.2 | 0.4 | 0.2 | 0.4 | 0.3 |
| Tensile Strength [Mpa] | Value | 207 | 223 | 204 | 205 | 213 | 249 | 201 |
| | St. Dev. | 0.4 | 1.2 | 0.8 | 0.7 | 1.0 | 1.2 | 1.5 |
| Tensile Elongation [%] | Value | 4.2 | 4.1 | 3.6 | 4.0 | 3.5 | 3.6 | 2.5 |
| | St. Dev. | 0.1 | 0.3 | 0.2 | 0.1 | 0.1 | 0.2 | 0.1 |
| N-Izod [kJ/m^2] | Value | 18.9 | 21.3 | 17.2 | 18.3 | 20.8 | 21.5 | 17.0 |
| | St. Dev. | 0.5 | 0.6 | 0.3 | 1.0 | 0.4 | 0.3 | 0.4 |
| Un-lzod [kJ/m^2] | Value | 94 | 103 | 84 | 87 | 96 | 115 | 70 |
| | St. Dev. | 6 | 6 | 1 | 4 | 4 | 5 | 4 |
| Dielectric Constant (1 MHz) | Value | 3.78 | 3.75 | 3.95 | 3.99 | 3.75 | 3.80 | 4.17 |
| | Error | 0.04 | 0.04 | 0.04 | 0.04 | 0.04 | 0.04 | 0.04 |
| Dielectric Constant (2.4 GHz) | Value | - | - | - | - | - | - | - |
| | Error | - | - | - | - | - | - | - |
| Dissapation Factor (1 MHz) | Value | 0.0150 | 0.0136 | 0.0156 | 0.0130 | 0.0130 | 0.0132 | 0.0140 |
| | Error | 0.0007 | 0.0007 | 0.0008 | 0.0006 | 0.0007 | 0.0007 | 0.0007 |
| Dissapation Factor (2.4 GHz) | Value | - | - | - | - | - | - | - |
| | Error | - | - | - | - | - | - | - |

Referring to Table 3, the sample including GF II had substantially similar dielectric performance to the sample including GF IV and, simultaneously, significantly improved mechanical performance relative to the samples including GF IV and GF V. Moreover, the sample including GF II maintained substantially similar dielectric performance to the sample including GF IV, but had improved tensile modulus, tensile strength, tensile elongation, and impact performance relative to the sample including GF V. For example, the difference between the dielectric constants at 1 GHz of sample 12 and sample 11, relative to sample 11 (100 * (*ε*₁₂(1*MHz*) - *ε*₁₁(1*MHz*))/*ε*₁₁(1*MHz*)) was 1.4%. Moreover, the relative difference between the dielectric constants at 1 GHz of sample 12 and sample 13, relative to sample 13 (100 ∗ (*ε*₁₂(1*MHz*) - *ε*₁₃(1*MHz*)/*ε*₁₃(1*MHz*)), was -8.8%, demonstrating a significantly improved (lower dielectric constant) dielectric performance. As used herein, εₛ(ω), is the dielectric constant of sample S at frequency ω. With respect to mechanical performance, the relative increase in the tensile modulus of sample 12 (GF II), relative to sample 11(GF IV) and sample 13 (GF V), was 27% and 11%, respectively. Similarly, the relative increase in the tensile strength of sample 12, relative to sample 11 and sample 13, was 17% and 24%, respectively.

Referring to Table 2, samples including GF I to III had significantly improved mechanical performance relative to the sample including GF IV, while simultaneously having substantially similar or improved dielectric performance. For example, the relative increase in the tensile modulus of samples 3 to 5 (GF I to III), with respect to sample 6 (GF IV), was from 4.0% to 9.5% increase. Similarly, the relative increase in the tensile strength of samples 3 to 5, with respect to sample 6, was from 7.8% to 18%. Moreover, the relative difference in the dielectric constant at 1 MHz between samples 3 to 5 and sample 6, relative to sample 6, was from -1.4% to 3%, with sample 5 having an improved dielectric performance. Similarly, the relative difference in the dielectric constant at 2.4 GHz between samples 3 to 5 and sample 6, relative to sample 6, was from 0.29% to 4.4%.

## Claims

1. An aliphatic polyamide composition comprising:
an aliphatic polyamide polymer and
from 30 wt.% to 60 wt.% of glass fiber, relative to the total weight of the polyamide composition,
wherein the glass fiber has:
a dielectric constant at 1 MHz measured according to ASTM D150 of from 5.1 to 5.5, preferably from 5.2 to 5.4, and
a tensile modulus measured according to ASTM D2343 of from 75 GPa to 100 GPa.

2. The aliphatic polyamide composition of claim 1, comprising from 35 wt.% to 45 wt.%, preferably 40 wt.% to 45 wt.%, of the glass fiber.

3. The aliphatic polyamide composition of either claim 1 or claim 2, wherein the glass fiber has a tensile modulus of from 80 GPa to 95 GPa, preferably from 85 GPa to 95 GPa.

4. The aliphatic polyamide composition of any one of claims 1 to 3, wherein the aliphatic polymer composition has a dielectric constant at 1 MHz of less than 4.0, preferably less than 3.9, more preferably less than 3.8, more preferably less than 3.75, more preferably less than 3.7, most preferably less than 3.6.

5. The aliphatic polyamide composition of any one of claims 1 to 4, wherein the aliphatic polymer composition has a dielectric constant at 2.4 GHz measured according to ASTM 2520 of less than 3.8, preferably less than 3.75, more preferably less than 3.7, more preferably less than 3.65, more preferably less than 3.6, more preferably less than 3.55, more preferably less than 3.5, most preferably less than 3.45.

6. The aliphatic polyamide composition of anyone of claims 1 to 5, wherein the aliphatic polyamide composition has a tensile modulus of at least 10 GPa, preferably at least 11 GPa, most preferably at least 13 GPa.

7. The aliphatic polyamide composition of any one of claims 1 to 6, further comprising from 0.5 wt.% to 5 wt.% of pigment, dye or colorant selected from the group consisting of TiO₂, carbon black, zinc sulfide, barium sulfate, zinc oxide, ferric oxide and any combination of one or more thereof, relative to the total weight of the aliphatic polyamide composition.

8. The aliphatic polyamide composition of any one of claims 1 to 7, comprising from 40 wt.% to 70 wt.% of the aliphatic polyamide, preferably 50 wt.% to 60 wt.%, most preferably 55 wt.% to 65 wt.%.

9. The aliphatic polyamide composition of any one of claims 1 to 8, wherein each polymer in the aliphatic polyamide composition is a distinct aliphatic polyamide polymer.

10. The aliphatic polyamide composition of any one of claims 1 to 9, wherein the aliphatic polyamide composition is free of aromatic polymers and free of cycloaliphatic polymers.

11. The aliphatic polyamide composition of any one of claims 1 to 10, wherein the aliphatic polyamide polymer has an inherent viscosity of 0.7 dL/g to 1.4 dL/g.

12. A mobile electronic device component comprising a radio antenna and the aliphatic polyamide composition of any one of claims 1 to 11.

13. The mobile electronic device component of claim 12, wherein the radio antenna is a WiFi antenna or an RFID antenna.

14. The mobile electronic device component of either claim 12 or 13, wherein the mobile electronic device component is an antenna housing.

15. The mobile electronic device component of any one of claims 12 to 14, wherein the mobile electronic device is selected from the group consisting of a mobile phone, a personal digital assistant, a laptop computer, a tablet computer, a wearable computing device, a camera, a portable audio player, a portable radio, a global position system receiver, and a portable game console.

## Patentansprüche

1. Zusammensetzung aus aliphatischen Polyamiden, die Folgendes umfasst:
ein aliphatisches Polyamidpolymer und
etwa 30 Gew.-% **bis etwa 60** Gew.-%, **bezogen auf das** Gesamtgewicht der Polyamidzusammensetzung, Glasfasern, wobei die Glasfaser Folgendes aufweist:
eine gemäß ASTM D150 bei 1 MHz gemessene Dielektrizitätskonstante von 5,1 bis 5,5, vorzugsweise von 5,2 bis 5,4, und
einen gemäß ASTM D2343 gemessenen Zugmodul von 75 GPa bis 100 GPa.

2. Zusammensetzung aus aliphatischen Polyamiden nach Anspruch 1, umfassend 35 Gew.% bis 45 Gew.%, vorzugsweise 40 Gew.% bis 45 Gew.%, der Glasfaser.

3. Zusammensetzung aus aliphatischen Polyamiden nach Anspruch 1 oder Anspruch 2, wobei die Glasfaser einen Zugmodul von 80 GPa bis 95 GPa, vorzugsweise von 85 GPa bis 95 GPa, aufweist.

4. Zusammensetzung aus aliphatischen Polyamiden nach einem der Ansprüche 1 bis 3, wobei die Zusammensetzung aus aliphatischen Polymeren bei 1 MHz eine Dielektrizitätskonstante von weniger als 4,0, vorzugsweise weniger als 3,9, weiter bevorzugt weniger als 3,8, noch weiter bevorzugt weniger als 3,75, noch weiter bevorzugt weniger als 3,7, ganz besonders bevorzugt weniger als 3,6, aufweist.

5. Zusammensetzung aus aliphatischen Polyamiden nach einem der Ansprüche 1 bis 4, wobei die Zusammensetzung aus aliphatischen Polymeren gemäß ASTM 2520 bei 2,4 GHz eine Dielektrizitätskonstante von weniger als 3,8, vorzugsweise weniger als 3,75, weiter bevorzugt weniger als 3,7, noch weiter bevorzugt weniger als 3,65, noch weiter bevorzugt weniger als 3,6, noch weiter bevorzugt weniger als 3,55, noch weiter bevorzugt weniger als 3,5, ganz besonders bevorzugt weniger als 3,45, aufweist.

6. Zusammensetzung aus aliphatischen Polyamiden nach einem der Ansprüche 1 bis 5, wobei die Zusammensetzung aus aliphatischen Polyamiden einen Zugmodul von mindestens 10 GPa, vorzugsweise mindestens 11 GPa, ganz besonders bevorzugt mindestens 13 GPa, aufweist.

7. Zusammensetzung aus aliphatischen Polyamiden nach einem der Ansprüche 1 bis 6, ferner umfassend 0,5 Gew.% bis 5 Gew.-%, bezogen aus das Gesamtgewicht der Zusammensetzung aus aliphatischen Polyamiden, Pigment, Farbstoff oder Färbemittel, das aus der Gruppe bestehend aus TiO₂, Ruß, Zinksulfid, Bariumsulfat, Zinkoxid, Eisen(III)oxid und einer beliebigen Kombination eines oder mehrerer davon ausgewählt ist.

8. Zusammensetzung aus aliphatischen Polyamiden nach einem der Ansprüche 1 bis 7, umfassend 40 Gew.-% bis 70 Gew.-%, vorzugsweise 50 Gew.-% bis 60 Gew.-%, ganz besonders bevorzugt 55 Gew.-% bis 65 Gew.-%, der aliphatischen Polyamide.

9. Zusammensetzung aus aliphatischen Polyamiden nach einem der Ansprüche 1 bis 8, wobei es sich bei jedem Polymer in der Zusammensetzung aus aliphatischen Polyamiden um ein eindeutig aliphatisches Polyamidpolymer handelt.

10. Zusammensetzung aus aliphatischen Polyamiden nach einem der Ansprüche 1 bis 9, wobei die Zusammensetzung aus aliphatischen Polyamiden frei von aromatischen Polymeren und frei von cycloaliphatischen Polymeren ist.

11. Zusammensetzung aus aliphatischen Polyamiden nach einem der Ansprüche 1 bis 10, wobei das aliphatische Polyamidpolymer eine inhärente Viskosität von 0,7 dL/g bis 1,4 dL/g aufweist.

12. Bauelement eines mobilen elektronischen Geräts, umfassend eine Radioantenne und die Zusammensetzung aus aliphatischen Polyamiden nach einem der Ansprüche 1 bis 11.

13. Bauelement eines mobilen elektronischen Geräts nach Anspruch 12, wobei es sich bei der Radioantenne um eine WiFi-Antenne oder eine RFID-Antenne handelt.

14. Bauelement eines mobilen elektronischen Geräts nach Anspruch 12 oder 13, wobei es sich bei dem Bauelement des mobilen elektronischen Geräts um ein Antennengehäuse handelt.

15. Bauelement eines mobilen elektronischen Geräts nach einem der Ansprüche 12 bis 14, wobei das mobile elektronische Gerät aus der Gruppe bestehend aus einem Mobiltelefon, einem Personal Digital Assistant, einem Laptop-Computer, einem Tablet-Computer, einem tragbaren Rechengerät, einer Kamera, einem tragbaren Audioabspielgerät, einem tragbaren Radio, einem Globales-Positionsbestimmungssystem(GPS)-Empfänger und einer tragbaren Spielekonsole ausgewählt ist.

## Revendications

1. Composition de polyamide aliphatique comprenant :
un polymère de polyamide aliphatique et
de 30 % en poids à 60 % en poids de fibre de verre, rapporté au poids total de la composition de polyamide,
la fibre de verre ayant :
une constante diélectrique à 1 MHz mesurée selon la méthode ASTM D150 de 5,1 à 5,5, de préférence de 5,2 à 5,4, et
un module en traction mesuré selon la méthode ASTM D2343 de 75 GPa à 100 GPa.

2. Composition de polyamide aliphatique de la revendication 1, comprenant de 35 % en poids à 45 % en poids, de préférence 40 % en poids à 45 % en poids, de la fibre de verre.

3. Composition de polyamide aliphatique de la revendication 1 ou la revendication 2, dans laquelle la fibre de verre a un module en traction de 80 GPa à 95 GPa, de préférence de 85 GPa à 95 GPa.

4. Composition de polyamide aliphatique de l'une quelconque des revendications 1 à 3, la composition de polymère aliphatique ayant une constante diélectrique à 1 MHz de moins de 4,0, de préférence moins de 3,9, mieux moins de 3,8, mieux encore moins de 3,75, encore mieux moins de 3,7, idéalement moins de 3,6.

5. Composition de polyamide aliphatique de l'une quelconque des revendications 1 à 4, la composition de polymère aliphatique ayant une constante diélectrique à 2,4 GHz mesurée selon la méthode ASTM D2520 de moins de 3,8, de préférence moins de 3,75, mieux moins de_3,7, mieux encore moins de 3,65, encore mieux moins de 3,6, mieux moins de 3,55, mieux encore moins de 3,5, idéalement moins de 3,45.

6. Composition de polyamide aliphatique de l'une quelconque des revendications 1 à 5, la composition de polyamide aliphatique ayant un module en traction d'au moins 10 GPa, de préférence au moins 11 GPa, idéalement au moins 13 GPa.

7. Composition de polyamide aliphatique de l'une quelconque des revendications 1 à 6, comprenant en outre de 0,5 % en poids à 5 % en poids de pigment, teinture ou colorant choisi dans le groupe constitué par TiO₂, le noir de carbone, le sulfure de zinc, le sulfate de baryum, l'oxyde de zinc, l'oxyde ferrique et toute combinaison d'un ou plusieurs d'entre eux, rapporté au poids total de la composition de polyamide aliphatique.

8. Composition de polyamide aliphatique de l'une quelconque des revendications 1 à 7, comprenant de 40 % en poids à 70 % en poids du polyamide aliphatique, de préférence 50 % en poids à 60 % en poids, idéalement 55 % en poids à 65 % en poids.

9. Composition de polyamide aliphatique de l'une quelconque des revendications 1 à 8, chaque polymère dans la composition de polyamide aliphatique étant un polymère de polyamide aliphatique distinct.

10. Composition de polyamide aliphatique de l'une quelconque des revendications 1 à 9, la composition de polyamide aliphatique étant dépourvue de polymères aromatiques et dépourvue de polymères cycloaliphatiques.

11. Composition de polyamide aliphatique de l'une quelconque des revendications 1 à 10, dans laquelle le polymère de polyamide aliphatique a une viscosité intrinsèque de 0,7 dl/g à 1,4 dl/g.

12. Composant de dispositif électronique mobile comprenant une antenne radio et la composition de polyamide aliphatique de l'une quelconque des revendications 1 à 11.

13. Composant de dispositif électronique mobile de la revendication 12, dans lequel l'antenne radio est une antenne Wi-Fi ou une antenne RFID.

14. Composant de dispositif électronique mobile de la revendication 12 ou 13, le composant de dispositif électronique mobile étant un boîtier d'antenne.

15. Composant de dispositif électronique mobile de l'une quelconque des revendications 12 à 14, le dispositif électronique mobile étant choisi dans le groupe constitué par un téléphone mobile, un assistant numérique personnel, un ordinateur portable, une tablette, un dispositif informatique portable, une caméra, un lecteur audio portable, une radio portable, un récepteur de système de géolocalisation, et une console de jeu portable.
